# EUROPÄISCHE PATENTANMELDUNG

(11) **EP 3 798 080 A1**
(43) Veröffentlichungstag der Anmeldung: **31.03.2021**
(21) Anmeldenummer: 20199080.1
(22) Anmeldetag: 29.09.2020
(51) Int. Cl.: B61D 17/04, B61D 17/08

(54) **STÜTZSTRUKTURMODUL FÜR EINEN WAGENKASTEN**

(30) Priorität: 30.09.2019 DE 102019126375
(71) Anmelder: Bombardier Transportation GmbH, 10785 Berlin (DE)
(72) Erfinder: Seidler, Hendrik, 16562 Hohen Neuendorf (DE); Fuchs, Peter, 13469 Berlin (DE); Uschmann, Sven, 39104 Magdeburg (DE)
(74) Vertreter: Zimmermann & Partner Patentanwälte mbB

(57) **Zusammenfassung**

Die Erfindung betrifft ein Stützstrukturmodul (3) für einen Wagenkasten eines Schienenfahrzeuges, wobei das Stützstrukturmodul (3) additiv gefertigt und mit wenigstens einer Verbindungsfläche (21, 29, 33) zum Auflegen und/oder Befestigen eines Hüllmoduls (2) versehen ist.

## Beschreibung

Die Erfindung betrifft ein Stützstrukturmodul für einen Wagenkasten sowie einen Wagenkasten für ein Schienenfahrzeug.

Der Wagenkasten eines Schienenfahrzeuges bildet die tragende Struktur zur Befestigung sämtlicher Komponenten des Fahrzeuges und zugleich die Außenhülle des Passagierraumes. Wagenkästen werden üblicherweise aus Stahl oder Aluminium hergestellt. Bei der Erstellung von Wagenkästen aus Stahl werden tragende Strukturen erstellt, z.B. durch Nieten oder Schweißen. Die tragenden Strukturen werden von Längsträgern, Querträgern und Säulen gebildet. Die tragenden Strukturen bestehen üblicherweise aus Halbzeugen, wie zum Beispiel U-, Z-, L- oder T-Profilen. Zur Bildung der Hülle des Wagenkastens werden Hüllmodule auf die tragende Struktur aufgebracht bzw. die tragende Struktur wird mit Hüllmodulen beplankt. Auch die Hüllmodule haben eine aussteifende bzw. eine die tragende Struktur verstärkende Funktion. Die Hüllmodule bestehen zumeist aus Blechen, die mit der tragenden Struktur verschweißt werden. Derartige Wagenkästen sind in der EP 2 555 957 A1 und in der DE 10 2008 048 083 A1 beschrieben.

Um den Wagenkasten mit Fenstern zu versehen, können in die Hülle des Wagenkastens Ausschnitte eingebracht werden, die zum Beispiel der Montage von Fenstern oder Türen dienen. Weil üblicherweise auch die Hülle eines Wagenkastens eine tragende Funktion aufweist, können im Bereich dieser Ausschnitte während des Betriebes des Schienenfahrzeuges erhöhte Kräfte bzw. Spannungen auftreten. So werden unter anderem über die Kupplung sowie über die Drehgestelle des Schienenfahrzeuges, zum Beispiel wenn der Wagen beschleunigt oder abgebremst wird oder in eine Kurve hineinfährt, Biege- und Torsionsmomente in den Wagenkasten eingeleitet, die sich über die Hülle bis zu den Ausschnitten fortsetzen. Diese Belastungen führen in der Wagenkastenwand zu Zug- oder Druckspannungen, die sich vor allem an Ecken der Ausschnitte konzentrieren und diese stauchen oder dehnen können. Um erhöhten Belastungen in der Wagenkastenwand zu begegnen, wird die tragende Struktur im Bereich der erhöhten Belastungen verstärkt, zum Beispiel durch eine Vergrößerung der Blechdicke oder durch zusätzliche Träger oder Rippen.

In der DE 102008048083A1 wird vorgeschlagen, die Hülle des Wagenkastens aus Blechteilen mit unterschiedlicher Dicke zu fertigen. Auf diese Weise können in Bereichen, die einer geringeren Belastung ausgesetzt sind, geringere Blechstärken verwendet und Gewicht und Material eingespart werden.

In der EP 2 555 957 A1 wird eine Wagenkastenwand mit einer Hülle aus Blechen mit unterschiedlichen Eigenschaften beschrieben. Die Bleche grenzen stumpfstoßend aneinander an und sind zur Bildung einer versatzfreien Außenseite über durchgehende Laserschweißnähte miteinander verbunden. An Bereichen der Außenbeblechung, an denen erhöhte Spannungen auftreten, werden zum Beispiel Bleche mit größeren Wandstärken verwendet.

Nachteile der Außenwände bekannter Wagenkästen sind der verhältnismäßig hohe Fertigungsaufwand, der durch das Anfertigen passender Blechteile und die erforderlichen Schweißarbeiten entsteht, sowie das weiterhin hohe Gewicht der Wagenkästen.

Der Erfindung liegt daher die Aufgabe zu Grunde, einen Wagenkasten bereitzustellen, der bei einer hohen Festigkeit ein geringes Gewicht aufweist und einfach zu fertigen ist.

Diese Aufgabe wird erfindungsgemäß mit einem Stützstrukturmodul nach Anspruch 1, einem Wagenkastenelement nach Anspruch 10 sowie einem Verfahren zur Herstellung eines Stützstrukturmoduls nach Anspruch 15 gelöst.

Gemäß der Erfindung ist vorgesehen, dass das Stützstrukturmodul additiv gefertigt wird und mit wenigstens einer Verbindungsfläche zum Auflegen und/oder Befestigen eines Hüllmoduls versehen ist. Dabei wird gemäß einem erfindungsgemäßen Verfahren das Stützstrukturmodul zunächst separat gefertigt, bevor ein Hüllmodul für einen Wagenkasten auf das Stützstrukturmodul aufgebracht wird. "Additiv gefertigt" bezeichnet die Anwendung eines Verfahrens zur additiven Fertigung. Dabei ist der Begriff "additive Fertigung", wie in der Fachwelt üblich, als gleichbedeutend mit dem Begriff 3-D-Druck zu verstehen.

Zur Verbindung mit einem Hüllmodul ist bevorzugt wenigstens eine streifen- und/oder kreisförmige Verbindungsfläche an dem Stützstrukturmodul vorgesehen, auf die das Hüllmodul aufgelegt und/oder an der dieses befestigt werden kann. Die Verbindungsfläche kann als Stützfläche das Hüllmodul stützen und/oder mit dem Hüllmodul stoffschlüssig und/oder adhäsiv verbindbar sein.

Die Verbindungsfläche ist vorzugsweise an einer Verbindungsschnittstelle angeordnet. Die Verbindungsschnittstelle kann z.B. von einer Auskragung gebildet sein.

Die Verbindungsfläche ist bevorzugt im Wesentlichen zentrisch zu einem Steg des Stützstrukturmoduls angeordnet, oder der Flächenschwerpunkt der Verbindungsfläche ist im Wesentlichen zentrisch auf einem Steg angeordnet. Es können alternativ wenigstens zwei Verbindungsflächen vorgesehen sein, die beidseits des Steges angeordnet sind und deren Flächenschwerpunkt auf bzw. unter dem Steg liegt.

Die Verbindungsfläche kann wenigstens abschnittsweise plattenförmig gestaltet sein. Die Verbindungsfläche kann wenigstens eine Durchgangsöffnung aufweisen, um beim Verkleben mit einem Hüllelement eine Durchdringung durch den Klebstoff und somit einen Formschluss zu erreichen. Als Klebstoff kann beispielsweise ein Duroplast Verwendung finden.

Indem die Stützstruktur additiv gefertigt wird, lassen sich nahezu beliebige Geometrien in der Stützstruktur verwirklichen. In einer zweckmäßigen Weiterbildung der Erfindung kann die Stützstruktur ausgestaltet sein, auf den Wagenkasten wirkende Lasten im Wesentlichen vollständig aufzunehmen und/oder zu übertragen.

In einer bevorzugten Ausführungsform der Erfindung weist das Stützstrukturmodul Schnittstellen zur Anbindung benachbarter Stützstrukturmodule auf. Die Schnittstellen können für eine formschlüssige und/oder eine stoffschlüssige Verbindung mit einem benachbarten Stützstrukturmodul ausgestaltet sein. Die Schnittstellen können Verbindungselemente wie Aufnahmeöffnungen oder Befestigungsbolzen umfassen.

Das Stützstrukturmodul weist vorzugsweise wenigstens ein Stützstrukturprofil auf. Das Stützstrukturprofil kann mit einem veränderlichen Profilquerschnitt versehen sein. Der Profilquerschnitt kann an die jeweils lokal auftretenden Belastungen angepasst sein, um ein bestmögliches Verhältnis zwischen Materialaufwand und Festigkeit zu erreichen.

In einer weiteren bevorzugten Variante weist das Stützstrukturmodul bzw. das Stützstrukturprofil wenigstens einen Gurt und wenigstens einen zwischen Gurt und Verbindungsfläche angeordneten Steg auf, wobei der Steg eine dem Verlauf der angrenzenden Fläche des Hüllmodules angepasste Verbindungsfläche aufweist. Der Steg bildet eine kraftübertragende Verbindung zwischen Gurt und Hüllmodul. Während der Gurt bevorzugt im Wesentlichen den gesamten Umfang der auf den Wagenkasten wirkenden Lasten trägt bzw. den bei Belastungen des Wagenkastens entstehenden Kraftflusses leitet, wird das Hüllmodul im Wesentlichen durch das Stützstrukturmodul getragen.

Der wenigstens eine Steg kann wenigstens abschnittsweise von einem Vollkörper und/oder einem Hohlkörper gebildet sein. Ist der Steg abschnittsweise von einem Vollkörper gebildet, entspricht die Breite des Steges an der jeweiligen Stelle der Dicke des den Steg bildenden Vollkörpers.

Der wenigstens eine Steg des Stützstrukturmoduls weist bevorzugt eine Breite und/oder Dicke von nicht mehr als 2 mm, vorzugsweise von nicht mehr als 1,5 mm, äußerst vorzugsweise von nicht mehr als 1 mm auf. Die Breite und/oder Dicke und Höhe des Steges kann dabei entlang der Längserstreckung des Steges variieren. Der Steg kann Hohlräume und/oder Ausschnitte aufweisen, wobei angrenzend an die Hohlräume und/oder Ausschnitte die Breite und/oder Dicke verringert ist.

Der wenigstens eine Gurt des Stützstrukturmoduls weist bevorzugt eine Dicke auf, die ein vielfaches der Dicke des Steges beträgt. Insbesondere kann der Gurt eine Dicke von etwa 3 mm aufweisen.

Idealerweise sind der wenigstens eine Gurt und der wenigstens eine Steg von einem gemeinsamen, einteiligen Körper gebildet bzw. einteilig gefertigt. Dabei können Gurt und Steg bevorzugt aus einem homogenen Material gefertigt sein. Der Gurt und der Steg können in einem Arbeitsgang additiv gefertigt sein, wodurch nahezu beliebige Geometrien möglich sind, welche die vorrangigen Funktionen des Gurtes, nämlich der Kraftleitung, und die vorrangigen Funktionen des Steges, nämlich der Anordnung des Hüllmoduls an dem Gurt, optimal unterstützen. Gefügeveränderungen zwischen Gurt und Steg, die zu einer Verringerung der Festigkeit führen können, werden auf diese Weise vermieden.

Um einen optimalen Kraftverlauf in dem Steg und in dem Hüllmodul bzw. eine optimale Kraftübertragung zwischen Steg und Hüllmodul zu erreichen, kann der Gurt gemeinsam mit dem Steg Querschnitte wie z.B. ein Haus-förmiges (zwei parallel zueinander verlaufende Seitenwände mit einem auf den Seitenwänden angeordnetem, spitz zulaufendem Dach), HY-förmiges oder I-förmiges Profil bilden. Die Querschnitte können variabel ausgestaltet sein. In einer weiteren bevorzugten Variante kann der Gurt ein offenes und/oder geschlossenes Hohlprofil bilden, um bei gleicher Masse höhere Biegemomente aufnehmen zu können.

Das von Steg und/oder Gurt gebildete Hohlprofil kann in einer weiteren Variante der Erfindung Öffnungen aufweisen, insbesondere an im eingebauten Zustand des Stützstrukturmoduls nach unten weisenden Flächen des Steges und/oder Gurtes. Die Öffnungen bieten eine einfache Möglichkeit einer Drainage, so dass zum Beispiel durch Kondensation auftretendes Wasser abfließen kann und die Wahrscheinlichkeit einer Korrosion verringert wird. Der Abstand zwischen zwei Öffnungen beträgt z.B. 30 mm.

Der Steg weist gemäß einer zweckmäßigen Weiterbildung der Erfindung an das Hüllmodul angrenzende Öffnungen auf. Die Öffnungen können Durchbrüche bzw. Hohlräume zwischen Steg und Hüllmodul bilden. Die Öffnungen können alternativ als Unterbrechung des Steges ausgestaltet sein.

In einer weiteren vorteilhaften Ausgestaltung der Erfindung verlaufen der Gurt und/oder der Steg im Wesentlichen entlang eines in Betrieb des Schienenfahrzeuges auftretenden Lastpfades. Der Wagenkasten eines Schienenfahrzeuges wird während des Betriebes des Schienenfahrzeuges mit Lasten beaufschlagt, die sich in der Wand des Wagenkastens entlang von Lastpfaden konzentrieren. Diese Lastpfade können beispielsweise mittels einer computerunterstützten Berechnung oder Simulation ermittelt werden, insbesondere mit Hilfe der Finite-Elemente-Methode. Wird nun der Verlauf der Stützstruktur an den Verlauf der ermittelten Lastpfade angeglichen, kann bei gleichzeitig geringerem Gewicht eine erhöhte Steifigkeit des Wagenkastens erreicht werden.

Idealerweise deckt die Stützstruktur einen Großteil möglicher, auf den Wagenkasten wirkender Lastpfade ab. Das Stützstrukturmodul kann dazu eine Vielzahl von Stegen und Gurten aufweisen, die im Wesentlichen entlang der ermittelten Lastpfade verlaufen. Die Stege und Gurte eines Wagenkastenelementes können ineinander übergehen.

Wenigstens ein Steg und/oder Gurt des Stützstrukturmoduls kann einen bogenförmigen Verlauf aufweisen. Zusätzlich kann der wenigstens eine Steg und/oder Gurt wenigstens einen geradlinig verlaufenden Abschnitt aufweisen.

Das Stützstrukturmodul kann bevorzugt über seine Länge bzw. seine Breite eine inhomogene Materialverteilung aufweisen, um auftretenden Lasten gerecht zu werden. Das Material und/oder die Masse des Stützstrukturmoduls kann an Stellen konzentriert sein, an welchen im Betrieb erhöhte Lasten auftreten.

Ein erfindungsgemäßes Wagenkastenelement mit einem erfindungsgemäßen Stützstrukturmodul weist wenigstens ein Hüllmodul auf, wobei das Stützstrukturmodul additiv gefertigt und adhäsiv und/oder stoffschlüssig mit dem Hüllmodul verbunden ist.

Am Rand des Wagenkastenelementes können die Gurte Befestigungs- und/oder Kraftübertragungsschnittstellen bilden. Die Befestigungs- und/oder Kraftübertragungsschnittstellen können beispielsweise von Kontaktflächen gebildet sein, die im montierten Zustand des Wagenkastens auf Kontaktflächen benachbarter Elemente des Wagenkastens aufliegen oder mit diesen verschweißt werden.

Gemäß einer weiteren Variante der Erfindung wird ein Teil der auf den Gurt wirkenden Lasten über den Steg auf das Hüllmodul übertragen, das somit eine stützende Funktion innehat. Dies setzt eine hochfeste Kraftübertragung zwischen Hüllmodul und Stützstrukturmodul voraus, die bevorzugt durch eine Klebeverbindung hergestellt sein kann.

Das Hüllmodul kann bevorzugt flächen- bzw. plattenförmig ausgestaltet sein. Weil das Hüllmodul bevorzugt keine Kräfte überträgt, kann dieses von Materialien mit geringerer Festigkeit gebildet sein. Insbesondere kann das Hüllmodul aus Kunststoff gebildet sein. Mögliche Materialien sind insbesondere Faserkunststoffe, beispielsweise Glasfaser- oder Kohlefaser-kunststoff, oder hybride Sandwich-Materialien wie z.B. Metall-KunststoffVerbindungen.

Das Stützstrukturmodul bedeckt gemäß einer bevorzugten Variante der Erfindung nur einen Bruchteil der Innenfläche des Hüllmoduls. Vorzugsweise bedeckt das Stützstrukturmodul weniger als 30 % der Innenfläche des Hüllmoduls, oder weniger als 20 % der Innenfläche, äußerst vorzugsweise weniger als 10 % der Innenfläche des Hüllmoduls. Auf diese Weise kann mehr Raum für Ausschnitte und/oder Installationen geschaffen werden.

Für eine optimale Kraftübertragung und Steifigkeit des Wagenkastenelementes kann die Höhe und/oder Breite und/oder Dicke des Gurtes und/oder Steges entlang der Längserstreckung des Stützstrukturmoduls variieren. Somit kann der Verlauf des Steges entsprechend dem Verlauf der Lastpfade optimiert bzw. an diesen angeglichen werden, so dass eine möglichst direkte Kraftleitung durch den Steg ermöglicht ist. Idealerweise folgt der wenigstens eine Gurt einem Lastpfad, entlang welchem sich im Betrieb des Schienenfahrzeuges der Kraftfluss konzentriert.

Das Wagenkastenelement weist gemäß einer weiteren Variante der Erfindung einen Ausschnitt auf. Der Ausschnitt kann zum Einbau eines Fensters oder einer Tür vorgesehen sein. Der Ausschnitt kann im Wesentlichen rechteckig gestaltet sein. Das Stützstrukturmodul oder der wenigstens eine Steg grenzt idealerweise an die Ecken des rechteckigen Ausschnittes an. Auf diese Weise werden die Lasten, die sich im Betrieb auf die Ecken des Ausschnittes konzentrieren, durch den Steg abgeleitet.

Der Ausschnitt ist vorzugsweise randseitig von einem Rahmenprofil begrenzt. Das Rahmenprofil kann einen Tür- oder Fensterrahmen bilden. Auf den Ausschnitt über die Hülle des Wagenkastens wirkende Kräfte können durch das Rahmenprofil aufgenommen und abgeleitet werden. Idealerweise grenzt dazu das Stützstrukturmodul, insbesondere der wenigstens eine Gurt, an das Rahmenprofil an. Das Rahmenprofil grenzt also bevorzugt wenigstens abschnittsweise kraftübertragend an das Stützstrukturmodul und insbesondere den wenigstens einen Gurt an und/oder der Gurt ist kraftübertragend mit dem Rahmenprofil verbunden. Das Stützstrukturmodul kann dazu eine Stützfläche aufweisen, die an das Rahmenprofil angrenzt. Idealerweise ist die Stützfläche auf einer dem Hüllmodul abgewandten Seite des Rahmenprofils angeordnet.

Das erfindungsgemäße Wagenkastenelement bildet in einer weiteren zweckmäßigen Ausgestaltung der Erfindung ein Wagenkastenmodul mit standardisierten Schnittstellen. Die Schnittstellen des Wagenkastenmoduls können zur Übertragung von Kräften von einem oder von mehreren Gurten und/oder Stegen und/oder Hüllmodulen gebildet sein. Zum Aufbau eines Wagenkastens werden die Wagenkastenelemente bevorzugt an ihren Schnittstellen miteinander verschweißt.

Ein erfindungsgemäßer Wagenkasten weist wenigstens ein Wagenkastenelement mit den oben beschriebenen Merkmalen auf. Entsprechende Wagenkastenelemente können Seitenwandmodule, Endwandmodule, Dachmodule und Bodenmodule bilden.

Gemäß einer bevorzugten Ausführung eines erfindungsgemäßen Wagenkastens ist ein an einem Seitenwandmodul angeordnetes Stützstrukturmodul stoffschlüssig mit einem Dachmodul und/oder Bodenmodul verbindbar. Ein Hüllmodul und ein Stützstrukturmodul bilden gemeinsam ein Seitenwandmodul. Das Hüllmodul kann dazu bevorzugt adhäsiv auf einem Stützstrukturmodul aufgebracht bzw. mit diesem verbunden sein. Um das Seitenwandmodul mit einem Dachmodul und/oder Bodenmodul zu verbinden, wird dieses bevorzugt über das Stützstrukturmodul mit dem Dachmodul und/oder Bodenmodul verschweißt.

In einer bevorzugten Variante des Wagenkastens bildet das Hüllmodul ein Bindeglied zwischen benachbarten Wagenkastenelementen. Es ist vorzugsweise ein Dachgurt und/oder ein Untergestellträger vorgesehen, wobei das Hüllmodul überlappend mit der Stützstruktur und/oder dem Dachgurt und/oder dem Untergestellträger verbunden ist. Das Hüllmodul ist bevorzugt mit der Stützstruktur, dem Dachgurt und/oder dem Untergestellträger verklebt. Der Untergestellträger kann insbesondere als Langträger ausgeführt sein und sich über mehrere Seitenwandmodule und/oder Bodenmodule erstrecken.

Gemäß einem erfindungsgemäßen Verfahren zur Herstellung eines Stützstrukturmoduls sind die folgenden Schritte vorgesehen:

Zunächst wird eine computerunterstützte Topologieoptimierung durchgeführt, wobei der Bauraum durch die Geometrie eines Hüllmoduls definiert ist. Das Hüllmodul bildet mit seiner Innenfläche eine Begrenzung des Bauraums, der für die Erstellung des Stützstrukturmoduls zur Verfügung steht. Dabei kann das Stützstrukturmodul zumindest abschnittsweise von dem Hüllmodul beabstandet sein.

Im nächsten Schritt folgt eine additive Fertigung eines Steges mit wenigstens einer Verbindungsfläche und ein additives Aufbringen eines an den Steg angrenzenden Gurtes, mit einem Verlauf, der im Wesentlichen der ermittelten optimalen Topologie entspricht.

In einer weiteren Variante des Verfahrens kann das Hüllmodul als kraftübertragendes Bauteil in die Topologieoptimierung einfließen. Dabei wird das Hüllmodul als kraftleitendes Element in die Berechnung eingebunden, indem kraftübertragende Schnittstellen zum Stützstrukturmodul an dem Hüllelement definiert und in die Auslegung des Stützstrukturmoduls eingebunden werden.

Die additive Fertigung des Steges und/oder des Gurtes erfolgt bevorzugt durch Laser-Pulver-Auftragsschweißen oder Laser-Schweißdraht-Auftragsschweißen.

Für eine optimale Lastenverteilung auf dem Hüllmodul kann in einer weiteren Variante des erfindungsgemäßen Verfahrens zunächst eine Berechnung der Lastpfade auf einem vordefinierten Hüllmodul erfolgen. Idealerweise kann eine computerunterstützte Topologieoptimierung erfolgen, wobei anschließend der Verlauf der Gurte und Stege entsprechend der ermittelten optimalen Topologie gestaltet wird. Es wird zunächst eine computerunterstützte Topologieoptimierung durchgeführt. Anschließend werden die Gurte und Stege mit einem Verlauf gefertigt, der im Wesentlichen der durch die Topologieoptimierung ermittelten optimalen Formgebung entspricht.

Weil bei einer additiven Fertigung der Gurte und Stege auch veränderliche Querschnitte und bogenförmige Verläufe möglich sind, kann die Geometrie der Gurte und Stege entsprechend der ermittelten Lastpfade veränderlich gestaltet werden. Entsprechend wird gemäß einem weiteren bevorzugten Verfahrensschritt die Form des Querschnittes, die Höhe, die Breite und/oder die Länge der Gurte und Stege entsprechend der Ergebnisse einer zuvor berechneten Topologieoptimierung gewählt.

In einem erfindungsgemäßen Verfahren zur Topologieoptimierung wird die Grundgestalt des Stützstrukturmoduls computerunterstützt entworfen. Bevorzugt wird die Topologie (Grundgestalt) mittels der Finite-Elemente-Methode (FEM) computerunterstützt bestimmt. Der Bauraum für das Stützstrukturmodul wird einerseits durch das Hüllmodul nach außen und andererseits durch den maximal zur Verfügung stehenden Bauraum für die Stützstruktur bzw. den Passagier-Innenraum nach innen definiert. Insbesondere wird der für die Definition des Stützstrukturmoduls definierte Bauraum durch das Hüllmodul begrenzt. Die Geometrie des Hüllmodules wird bevorzugt vor Beginn der Topologieoptimierung definiert, wobei der Bauraum des Stützstrukturmoduls einseitig an dem Hüllmodul beginnt.

Die in Richtung eines Endes des Wagenkastenelementes verlaufenden Gurte und/oder Stege grenzen bevorzugt an das Ende des Hüllmodules an. Die Enden der Gurte und/oder Stege können kraftübertragende Anschlussschnittstellen für den Einbau des Wagenkastenelementes in einen Wagenkasten bilden. Die Anschlussschnittstellen liegen somit auf den Lastpfaden. Indem zwei Wagenkastenelemente an den Anschlussschnittstellen miteinander verbindbar sind, z.B. durch Schweißen, kann über benachbarte Stützstrukturmodule ein durchgängiger Kraftfluss erreicht werden. Die Stützstrukturmodule zweier benachbarter Wagenkastenelemente können die auf die Wagenkastenelemente wirkenden Lasten idealerweise im Wesentlichen vollständig ableiten.

Die Anschlussschnittstellen können beispielsweise von Schweißflächen gebildet sein, an welchen aneinander angrenzende Stützstrukturmodule miteinander verschweißbar und/oder tragende Profile anschließbar sind.

Der Gurt und/oder der Steg ist im Bereich der Anschlussschnittstelle bevorzugt verbreitert, um eine hohe Kraftübertragung bei geringer Spannung zu ermöglichen.

Das Wagenkastenelement wird gemäß einer weiteren Variante des Verfahrens mit einem Ausschnitt entworfen. Der Ausschnitt kann zum Einbau eines Fensters oder einer Tür vorgesehen sein. Der Ausschnitt wird bevorzugt von einem Rahmenprofil umgeben. Der für die Definition des Stützstrukturmoduls definierte Bauraum wird anschließend idealerweise wenigstens abschnittsweise durch das Rahmenprofil begrenzt. Dabei kann der Bauraum das Rahmenprofil umgeben. Die Geometrie des Rahmenprofils wird dazu bevorzugt vor Beginn der Topologieoptimierung definiert. Der Bauraum des Stützstrukturmoduls beginnt bevorzugt an dem Rahmenprofil oder schließt dieses mit ein. Entsprechend kann das Stützstrukturmodul an das Rahmenprofil angrenzen oder dieses umfassen.

Die beiliegenden Zeichnungen veranschaulichen erfindungsgemäße Ausführungsformen und dienen zusammen mit der Beschreibung der Erläuterung der Prinzipien der Erfindung. Es zeigen:
Fig. 1 eine Ausführungsform eines erfindungsgemäßen Wagenkastenelementes für einen Wagenkasten eines Schienenfahrzeuges;
Fig. 2 einen vergrößerten Ausschnitt der Ausführungsform der Fig. 1;
Fig. 3 ein erfindungsgemäßes Stützstrukturmodul;
Fig. 4 ein Stützstrukturmodul mit Rahmenprofilen;
Fig. 5 eine erste Ausführungsform eines Stützstrukturprofil mit Verbindungsflächen;
Fig. 6 eine zweite Ausführungsform eines Stützstrukturprofil mit Verbindungsflächen;
Fig. 7 eine dritte Ausführungsform eines Stützstrukturprofil mit Verbindungsflächen;
Fig. 8 eine vierte Ausführungsform eines Stützstrukturprofil mit Verbindungsflächen.
Fig. 9 eine geschnittene Teilansicht eines erfindungsgemäßen Wagenkastens.

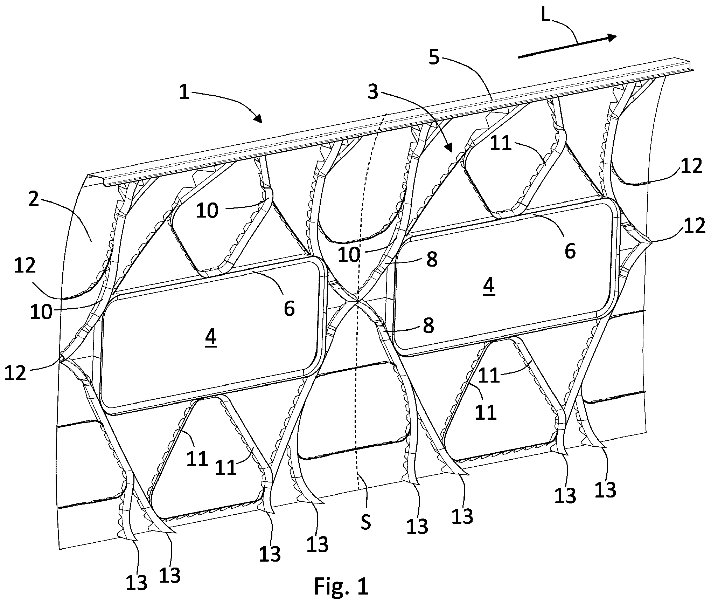

Zunächst wird unter Bezugnahme auf die Figuren 1 bis 3 ein bevorzugtes Ausführungsbeispiel eines erfindungsgemäßen Wagenkastenelementes beschrieben.

Figur 1 zeigt ein erfindungsgemäßes Wagenkastenelement 1. Das Wagenkastenelement 1 weist ein Hüllmodul 2 und ein Stützstrukturmodul 3 auf, wobei das Hüllmodul 2 auf dem Stützstrukturmodul 3 aufgebracht ist. In dem Wagenkastenelement 1 sind zwei Ausschnitte 4 eingebracht, die dem Einbau von Fenstern dienen.

Das Hüllmodul 2 ist im Wesentlichen aus flächen- oder plattenförmigen Blechen gefertigt. Das Hüllmodul 2 bildet die Außenfläche des Wagenkastens bzw. Schienenfahrzeuges und sorgt im Wesentlichen für die räumliche Trennung zwischen Innenraum und Umwelt. Für eine optimale Gestaltung des Innenraums ist das Hüllmodul 2 zur Außenseite hin gewölbt. Das Stützstrukturmodul 3 ist auf einer konkav gewölbten Innenfläche des Hüllmodules 2 aufgebracht. Das Stützstrukturmodul 3 ist bevorzugt an der Innenfläche des Hüllmodules 2 mit dem Hüllmodul 2 verklebt.

Das Wagenkastenelement 1 ist symmetrisch aufgebaut. Beidseitig der Symmetrielinie S weist das Wagenkastenelement 1 und somit auch das Stützstrukturmodul 3 einen identischen Aufbau auf. Entsprechend kann, um den Raumbedarf für die Herstellung des Stützstrukturmoduls 3 zu verringern, das Stützstruktumodul 3 aus zwei identisch ausgestalteten Teilmodulen gefertigt sein, die anschließend an Anschlussschnittstellen im Bereich der Symmetrielinie S miteinander verschweißt werden.

An seinem oberen Ende umfasst das Hüllmodul 2 ein in Längsrichtung L verlaufendes Längsprofil 5, das das Wagenkastenelement 1 verstärkt und einen Übergang zum hier nicht gezeigten Dach des Wagenkastens bildet. Das Stützstrukturmodul 3 erstreckt sich bis auf das Längsprofil 5 und ist auch mit dem Längsprofil 5 verklebt. In einer bevorzugten Variante der Erfindung kann sich das Längsprofil 5 auch über mehrere Wagenkastenelemente 1 erstrecken, wobei das Hüllmodul 2 mit dem Längsprofil 5 überlappend verklebt sein kann.

Die Stege 7 und/oder Gurte 8 können einen bogenförmigen Verlauf aufweisen, der im Wesentlichen dem bogenförmigen Verlauf eines im Betrieb auftretenden Lastpfades entspricht. In dem Ausführungsbeispiel der Fig. 1 sind bogenförmige Gurtabschnitte 10 vorgesehen, die eine optimierte Kraftleitung ermöglichen. Des Weiteren sind geradlinig verlaufende Gurtabschnitte 11 vorhanden. Die Mehrzahl der geradlinigen Gurtabschnitte 11 verläuft im Wesentlichen schräg zur Längsrichtung L. Damit dienen die geradlinigen Gurtabschnitte 11 insbesondere dazu, die Verwindungssteifigkeit des Wagenkastens zu erhöhen.

Die Ausschnitte 4 sind jeweils von einem Rahmenprofil 6 umgeben. Die Rahmenprofile 6 bilden Fensterrahmen zur Aufnahme von Fensterdichtungen und Fensterscheiben. Die Rahmenprofile 6 werden wiederum von den Stützstrukturmodulen 3 gestützt. Dazu grenzen die Stützstrukturmodule 3 an die Rahmenprofile 6 an. Insbesondere die Gurte 8 grenzen an die Rahmenprofil 6 an und stützen dieses gegen äußere und innere Belastungen.

Die Rahmenprofile 6 bilden vorzugsweise einen Bestandteil des Stützstrukturmoduls 3. Die Rahmenprofile 6 sind bevorzugt aus Halbzeugen gefertigt, und mit dem Stützstrukturmodul 3 verschweißt, um eine möglichst genau fertigbare Schnittstelle für einzubauende Fenster zu erreichen. Erst nach dem Schweißvorgang erfolgt das Aufkleben des Hüllmoduls 2.

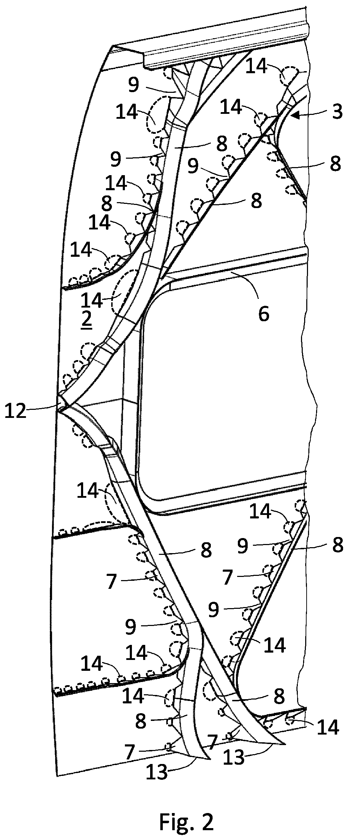

Fig. 2 ist ein vergrößerter Ausschnitt eines Wagenkastenelementes. Das Stützstrukturmodul 3 umfasst Stege 7 und Gurte 8. Die Stege 7 sind auf das Hüllmodul 2 aufgeklebt, wobei Verbindungsschnittstellen 14 auf den Stegen 7 Flächen für eine adhäsive Verbindung mit dem Hüllmodul 2 bereitstellen. Die Verbindungsschnittstellen 14 schließen an die Stege 7 an. Die Verbindungsschnittstellen 14 weisen (hier verdeckte) Verbindungsflächen auf, die dem Hüllmodul 2 zugewandt sind und sich im Wesentlichen parallel zum jeweils benachbarten Abschnitt des Hüllmoduls 2 verlaufen.

Die Stege 7 weisen Einbuchtungen 9 auf, an welchen keine Verbindung zwischen Hüllmodul 2 und Steg 7 besteht und die der Gewichtsreduktion des Stützstrukturmoduls 3 sowie der Drainage der zwischen Stegen 7 und Hüllmodul 2 eingeschlossenen Hohlräume dient.

Zwischen zwei Einbuchtungen 9 verlaufende Abschnitte des Steges 7 weisen ein im Wesentlichen trapezförmiges Profil auf, wobei eine lange Seite des Trapezes an den Gurt 8 angrenzt, während eine im Wesentlichen parallel zur langen Seite verlaufende kurze Seite des Trapezes jeweils an eine Verbindungsschnittstelle 14 angrenzt. Die durch die Einbuchtungen 9 gemeinsam mit dem Hüllmodul 2 gebildeten Öffnungen sind groß genug, um einen Ablauf von Wasser zu ermöglichen und somit Korrosion zu verhindern.

Die in Richtung des linksseitigen Endes des Wagenkastenelementes 1 verlaufenden Gurte 8 und Stege 7 grenzen an das Ende des Hüllmodules 2 an. Damit bilden die Enden der Gurte 8 und Stege 7 kraftübertragende Anschlussschnittstellen 12 für den Einbau des Wagenkastenelementes 1 in einen Wagenkasten bzw. für die Verbindung mit benachbarten Wagenkastenelementen 1.

Auch im Bodenbereich grenzen die Gurte 8 und Stege 7 an das Ende des Hüllelementes 2 an, wobei hier kraftübertragende Anschlussschnittstellen 13 zur Verbindung mit dem Wagenkastenboden vorgesehen sind. Das Wagenkastenelement 1 weist somit vordefinierte Schnittstellen auf, die eine Verwendung im Sinne eines Wagenkastenmoduls ermöglichen. Wagenkastenelemente 1 können beispielsweise als Gleichteile vorgefertigt werden, um einen Wagenkasten effizient herzustellen.

Die Anschlussschnittstellen 12, 13 sind von den Gurten 8 und/oder Stegen 7 gebildet und liegen idealerweise auf den Lastpfaden bzw. zentrisch zu den Lastpfaden. Beim Einbau des Wagenkastenelementes 1 in einen Wagenkasten ist somit gewährleistet, dass eine nahtlose Einbindung der Stützstruktur 3 in den Kraftfluss des Wagenkastens erfolgt und auf den Wagenkasten wirkende Lasten von einem Wagenkastenelement 1 in benachbarte Wagenkastenelemente 1 übertragen werden.

Aneinander angefügte Wagenkastenelemente 1 bilden an ihren Anschlussschnittstellen 12 einen kreuzförmigen Verlauf der Gurte 8, entsprechend dem mittig in Fig. 1 dargestellten Verlauf der Gurte 8. Damit ergibt sich durch das Hintereinanderfügen mehrerer Wagenkastenelemente 1 eine gleichförmige Verteilung der aus Stützstrukturmodulen 3 zusammengesetzten Stützstruktur.

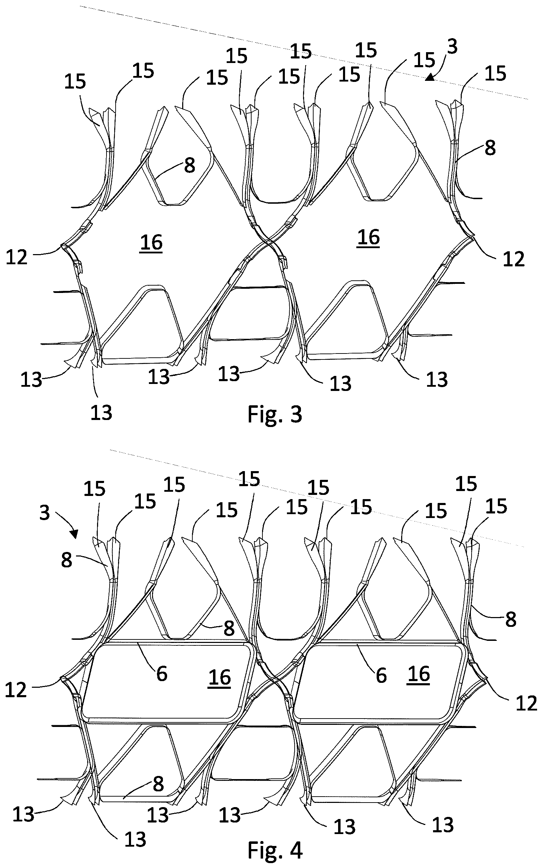

Fig. 3 zeigt ein Stützstrukturmodul 3 ohne Hüllmodul. Das Stützstrukturmodul 3 ist additiv gefertigt, um auch komplexe Geometrien erzeugen zu können. Entsprechend weist das Stützstrukturmodul 3 veränderliche Querschnitte auf. So können Durchmesser, Breite, Höhe und/oder die Geometrie eines Gurtes 8 entlang seiner Erstreckung variabel ausgestaltet sein.

In Bereichen, in welchen im Wagenkasten Ausschnitte angeordnet werden sollen, sind Freiräume 16 vorgesehen. Das Stützstrukturmodul 3 umgibt diese Freiräume 16, dringt jedoch nicht in diese ein. Nach oben enden die Gurte 8 in Anschlussschnittstellen 15, die dem Anschluss an ein Dach des Wagenkastens bzw. an ein Längsprofil dienen. Nach unten enden die Gurte 8 in Anschlussschnittstellen 13, die den Anschluss an einen Boden des Wagenkastens dienen. Die Anschlussschnittstellen 13, 15 sind breiter als die durchschnittliche Breite des Gurtes 8, um die im Betrieb bei der Kraftübertragung auftretenden Spannungen zu verringern.

Fig. 4 zeigt ein Stützstrukturmodul 3, in dem in den Freiräumen 16 Rahmenprofile 6 eingefügt sind. Die Rahmenprofile 6 bilden tragende Teile des Stützstrukturmoduls 3. Die Rahmenprofile 6 können als integraler Teil des Stützstrukturmoduls 3 gemeinsam mit Gurten 8 und Stegen 7 additiv gefertigt sein.

Gemäß einer bevorzugten Variante eines Stützstrukturmoduls 3 sind die Rahmenprofile 6 mit den Gurten 8 des Stützstrukturmoduls 3 verschweißt. Bevorzugt werden dazu die Rahmenprofile 6 im Anschluss an die additive Fertigung der Gurte 8 zwischen diesen positioniert und mit diesen verscheißt.

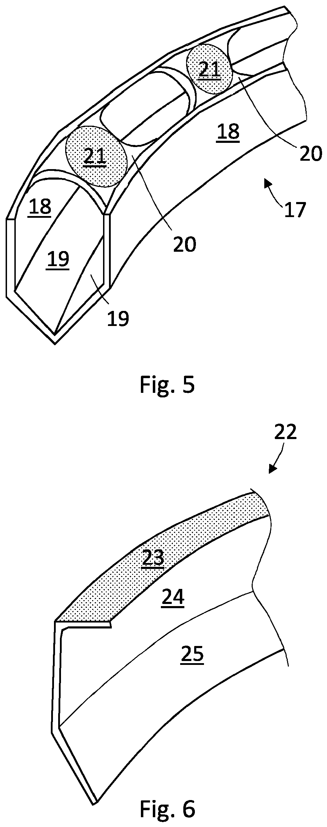

In den Figuren 5 bis 8 sind unterschiedlich ausgestaltete Stützstrukturprofile mit Verbindungsflächen gezeigt.

Fig. 5 zeigt ein hausförmiges Stützstrukturprofil 17, das das Stützstrukturmodul bildet. Das Stützstrukturprofil 17 weist zwei im Wesentlichen parallel zueinander verlaufende Seitenwände 18 sowie zwei jeweils an einer Seitenwand 18 anschließende Dachwände 19 auf, wobei die Dachwände 19 aneinander angrenzen.

Zwischen den Seitenwänden 18, auf einer den Dachwänden 19 abgewandten Seite des Stützstrukturprofils 17 sind Bodenwände 20 vorgesehen, die Verbindungsschnittstellen bilden. Die Bodenwände 20 tragen Verbindungsflächen 21 zur adhäsiven Verbindung mit einem Hüllmodul. Die Verbindungsflächen 21 sind im Wesentlichen oval geformt. Zur Verbindung mit einem Hüllmodul wird im Bereich der Verbindungsflächen 21 ein Klebstoff aufgetragen.

In Fig. 6 ist eine weitere Variante eines Stützstrukturprofils gezeigt. Das Stützstrukturprofil 22 ist mit einem C-förmigen Querschnitt versehen. Eine Grundfläche 23 des Stützstrukturprofils 22 dient als Verbindungsfläche. Die Grundfläche 23 ist dazu dem Verlauf eines zu befestigenden Hüllmoduls angepasst. Das Stützstrukturprofil 22 umfasst einen im Wesentlichen Senkrecht zur Grundfläche 23 verlaufenden Wandabschnitt 24 sowie einen am Wandabschnitt 24 anschließenden, schräg zur Grundfläche 23 verlaufenden Wandabschnitt 25.

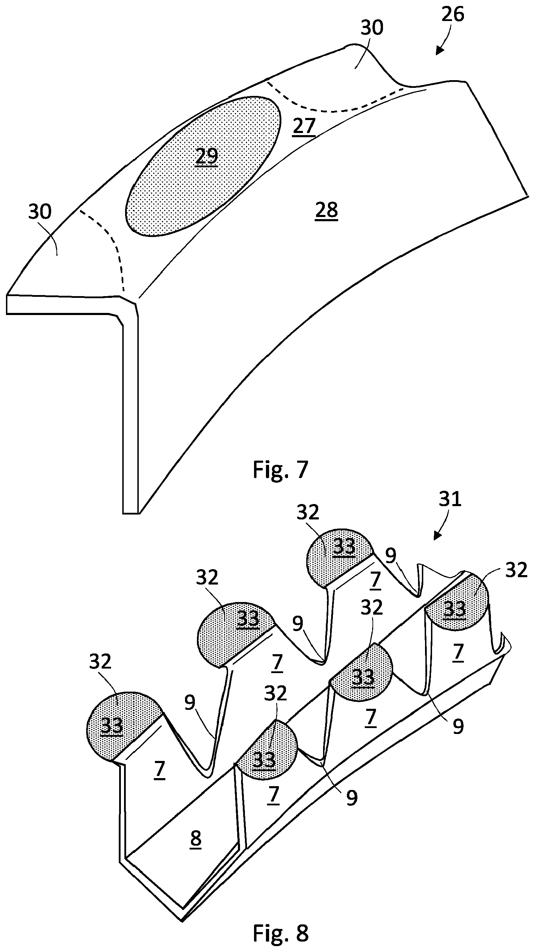

Die in Fig. 7 gezeigte Variante eines Stützstrukturprofils 26 ist im Wesentlichen L-förmig gestaltet, mit einer Grundfläche 27 und einem an die Grundfläche 27 anschließenden, im Wesentlichen senkrecht zur Grundfläche 27 verlaufenden Wandabschnitt 28. Auf der Grundfläche 27 ist eine Verbindungsfläche 29 vorgesehen, die der Verbindung mit einem Hüllmodul dient.

Beidseits der Verbindungsfläche 29 können Ausschnitte 30 vorgesehen sein, die hier mit einer gestrichelten Linie angedeutet sind. Durch Materialaussparungen im Bereich der Ausschnitte 30 kann Material eingespart und das Gewicht des Wagenkastens insgesamt reduziert werden. Des Weiteren entsteht durch die Ausschnitte 30 eine höhere Elastizität des Stützstrukturprofils 26 im Bereich der Verbindungsfläche 29, die unter Belastung des Wagenkastens einen verbesserten Kraftausgleich ermöglicht und somit Spannungsspitzen im Bereich der Verbindungsfläche 29, die zu einem Ablösen des Klebstoffs führen könnten, verringert.

Ein weiteres Stützstrukturprofil 31 mit einem im Wesentlichen U-förmigen Querschnitt zeigt Fig. 8. Einbuchtungen 9 in dem Stützstrukturprofil 31 bilden im montierten Zustand gemeinsam mit dem Hüllmodul Öffnungen, die dem Ablauf von Kondenswasser dienen. Des Weiteren führen die Einbuchtungen 9 zu einer Materialersparnis, die das Gewicht des Wagenkastens insgesamt senkt.

Die Seitenwände des Stützstrukturprofils 31 bilden jeweils einen Steg 7. Die Stege 7 tragen einen abgewinkelt von den Stegen 7 verlaufenden Gurt 8. An den vom Gurt wegweisenden Ende der Stege 7 sind Verbindungsschnittstellen 32 vorgesehen, die der Anbindung eines Hüllmoduls dienen. Die Verbindungsschnittstellen 32 sind abgewinkelten Abschnitten der Stege 7 gebildet. Auf den Verbindungsschnittstellen 32 befinden sich Verbindungsflächen 33.

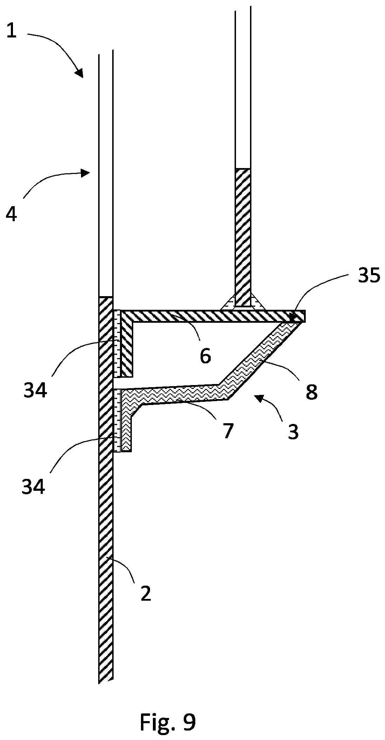

In Fig. 9 ist eine Teilansicht eines Wagenkastenelementes mit einem Ausschnitt 4 für den Einbau eines Fensters gezeigt. Der Ausschnitt 4 im Hüllmodul 2 ist auf der Innenseite des Wagenkastenelementes von einem Rahmenprofil 6 umgeben. Das Rahmenprofil 6 ist mit adhäsivem Material 34 an dem Hüllmodul 2 befestigt. Das Rahmenprofil 6 ist L-förmig gestaltet, wodurch eine verbreiterte Fläche zur adhäsiven Anbindung an das Hüllmodul 2 zur Verfügung steht.

Unterhalb des Rahmenprofils 6 verläuft das Stützstrukturmodul 3, das additiv gefertigt ist. Das Stützstrukturmodul weist in Richtung des Hüllmoduls einen L-förmigen Profilabschnitt auf, über das das Stützstrukturmodul 3 mit dem Hüllmodul 2 verbunden ist.

Das Stützstrukturmodul 3 weist eine Stützfläche 35 auf, die an dem Rahmenprofil 6 anliegt. Die Stützfläche 35 stütz das Rahmenprofil 6 auf einer dem Hüllmodul 2 abgewandten Seite und bildet somit eine Versteifung des Rahmenprofils 6.

### Bezugszeichenliste

- 1: Wagenkastenelement
- 2: Hüllmodul
- 3: Stützstrukturmodul
- 4: Ausschnitt
- 5: Längsprofil
- 6: Rahmenprofil
- 7: Steg
- 8: Gurt
- 9: Einbuchtung
- 10: Bogenförmiger Gurtabschnitt
- 11: Geradliniger Gurtabschnitt
- 12: Anschlussschnittstelle (Seite)
- 13: Anschlussschnittstelle (Boden)
- 14: Verbindungsschnittstelle
- 15: Anschlussschnittstelle (Dach)
- 16: Freiraum
- 17: Stützstrukturprofil
- 18: Seitenwand
- 19: Dachwand
- 20: Bodenwand
- 21: Verbindungsfläche
- 22: Stützstrukturprofil
- 23: Grundfläche
- 24,25: Wandabschnitt
- 26: Stützstrukturprofil
- 27: Grundfläche
- 28: Wandabschnitt
- 29: Verbindungsfläche
- 30: Ausschnitt
- 31: Stützstrukturprofil
- 32: Verbindungsschnittstellen
- 33: Verbindungsfläche
- 34: Adhäsives Material
- 35: Stützfläche

## Patentansprüche

1. Stützstrukturmodul (3) für einen Wagenkasten eines Schienenfahrzeuges, wobei das Stützstrukturmodul (3) additiv gefertigt und mit wenigstens einer Verbindungsfläche (21, 29, 33) zum Auflegen und/oder Befestigen eines Hüllmoduls (2) versehen ist.

2. Stützstrukturmodul (3) nach Anspruch 1, wobei die Verbindungsfläche (21, 29, 33) im Wesentlichen streifen- und/oder kreisförmig ausgestaltet ist.

3. Stützstrukturmodul (3) nach einem der obigen Ansprüche, wobei das Stützstrukturmodul (3) einen Großteil möglicher, auf den Wagenkasten wirkender Lastpfade abdeckt.

4. Stützstrukturmodul (3) nach einem der obigen Ansprüche, wobei das Stützstrukturmodul (3) Schnittstellen zur Anbindung benachbarter Stützstrukturmodule (3) aufweist.

5. Stützstrukturmodul (3) nach einem der obigen Ansprüche, wobei das Stützstrukturmodul (3) wenigstens einen Gurt (8) und wenigstens einen zwischen Gurt (8) und Verbindungsfläche (21, 29, 33) angeordneten Steg (7) umfasst.

6. Stützstrukturmodul (3) nach Anspruch 5, wobei der wenigstens eine Gurt (8) und der wenigstens eine Steg (7) von einem gemeinsamen, einteiligen Körper gebildet sind.

7. Stützstrukturmodul (3) nach Anspruch 5 oder 6, wobei der Gurt (8) gemeinsam mit dem Steg (7) ein Haus-, HY- oder I-förmiges Profil bildet.

8. Stützstrukturmodul (3) nach einem der Ansprüche 5 bis 7, wobei der Gurt (8) und/oder der Steg (7) im Wesentlichen entlang eines im Betrieb des Schienenfahrzeuges auftretenden Lastpfades verläuft.

9. Stützstrukturmodul (3) nach einem der Ansprüche 5 bis 8, wobei die Höhe und/oder Breite und/oder Dicke des Gurtes (8) und/oder Steges (7) entlang der Längserstreckung des Stützstrukturmoduls (3) variieren.

10. Wagenkastenelement (1) für den Wagenkasten eines Schienenfahrzeuges, **gekennzeichnet durch** ein Stützstrukturmodul (3) nach einem der obigen Ansprüche, mit wenigstens einem Hüllmodul (2), wobei das Stützstrukturmodul (3) additiv gefertigt und adhäsiv und/oder stoffschlüssig mit dem Hüllmodul (2) verbunden ist.

11. Wagenkastenelement (1) nach Anspruch 10, wobei der Steg wenigstens eine Verbindungsschnittstelle (14, 32) mit einer dem Verlauf der angrenzenden Fläche des Hüllmoduls (2) angepasste Verbindungsfläche (21, 29, 33) aufweist.

12. Wagenkastenelement (1) nach Anspruch 10 oder 11, wobei der Steg (7) an das Hüllmodul (2) angrenzende Einbuchtungen (9) aufweist.

13. Wagenkastenelement (1) nach einem der Ansprüche 10 bis 12, wobei das Stützstrukturmodul (3) einen Großteil möglicher, auf den Wagenkasten wirkender Lastpfade abdeckt.

14. Wagenkastenelement (1) nach einem der Ansprüche 10 bis 13, wobei das Wagenkastenelement (1) einen Ausschnitt (4, 30) aufweist, der randseitig von einem Rahmenprofil (6) begrenzt wird, wobei das Rahmenprofil (6) wenigstens abschnittsweise kraftübertragend an das Stützstrukturmodul (3) angrenzt und/oder kraftübertragend mit dem Stützstrukturmodul (3) verbunden ist.

15. Verfahren zur Herstellung eines Stützstrukturmoduls (3) nach Anspruch 1, **gekennzeichnet durch** die Schritte:
a. Durchführung einer computerunterstützten Topologieoptimierung, wobei der Bauraum durch die Geometrie eines Hüllmoduls (2) definiert ist,
b. additive Fertigung eines Steges (7) mit Verbindungsfläche (21, 29, 33) und additives Aufbringen eines den Steg (7) überbrückenden Gurtes, mit einem Verlauf, der im Wesentlichen der ermittelten optimalen Topologie entspricht.
